# EUROPEAN PATENT SPECIFICATION

(11) **EP 2 991 401 B1**
(45) Date of publication and mention of the grant of the patent: **01.11.2017**
(21) Application number: 13885719.8
(22) Date of filing: 27.05.2013
(51) Int. Cl.: H04W 36/00

(54) **TRANSMISSION OF OLD AND NEW SYSTEM INFORMATION OF A TARGET BASE STATION IN A HANDOVER**
ÜBERTRAGUNG VON ALTES UND NEUES SYSTEMINFORMATIONEN EINER ZIELBASESTATION IN EINEM HANDOVER
TRANSMISSION D'UNE ANCIENNE ET D'UNE NOUVELLE INFORMATION SYSTEME D'UNE STATION DE BASE CIBLE DANS UN CHANGEMENT DE CELLULE

(43) Date of publication of application: 02.03.2016
(73) Proprietor: Huawei Technologies Co., Ltd., Longgang District Shenzhen, Guangdong 518129 (CN)
(72) Inventor: QUAN, Wei, Shenzhen Guangdong 518129 (CN); ZHANG, Jian, Shenzhen Guangdong 518129 (CN)
(74) Representative: Goddar, Heinz J.
(86) International application number: PCT/CN2013/076278
(87) International publication number: WO 2014/190474

(56) References cited:
- WO-A1-2013/028114
- CN-A- 101 483 892
- CN-A- 101 483 892
- CN-A- 102 076 042
- CN-A- 102 083 153
- CN-A- 102 378 287
- HUAWEI: "Discussion of the validation issue of HO CMD", 3GPP DRAFT; R2-081641, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080325, 25 March 2008 (2008-03-25), XP050139363, [retrieved on 2008-03-25]
- PANASONIC: "BCCH modification period and paging period", 3GPP DRAFT; R2-081579_BCCH_MODIFICATION_PERIOD&PAGING_ PERIOD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080324, 24 March 2008 (2008-03-24), XP050139312, [retrieved on 2008-03-24]
- 3GPP DRAFT; R2-082522 CLARIFICATIOIN ON PRACH IDENTIFICATION PROBLEM IN HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080429, 29 April 2008 (2008-04-29), XP050140201, [retrieved on 2008-04-29]

## Description

### TECHNICAL FIELD

The present invention relates to the field of wireless communications technologies, and in particular, to a mobility management method, equipment, and system.

### BACKGROUND

Currently, compared with a conventional wired communications system, a wireless communications system having many advantages, such as a low cost, strong adaptability, and high extensibility, has been widely applied in various aspects, such as monitoring, telemetry, and mobile communications, of daily life. However, when wireless communication is performed, coverage of a cell is limited. In a moving process, when UE needs to move from a position covered by a cell to another cell, and if a service of the original cell is still used, service quality is inevitably degraded. In this case, mobility management is performed, and the UE is handed over from a channel of one cell to a channel of another cell, so as to ensure relatively good service quality and normal communication. Therefore, mobility management is extremely significant work that is ubiquitous in wireless communication.

A general process of existing mobility management is as follows: UE (User Equipment, user equipment) sends a measurement report to a source base station (serving base station); after performing handover decision (for example, selecting a candidate target base station), the source base station (serving base station) sends a handover request to a target base station; after determining to accept this handover, the target base station sends, to the source base station (serving base station), a handover request acknowledgement message that carries configuration information used for performing handover on the UE; the source base station (serving base station) sends a handover command that carries the foregoing configuration information to the UE; and the UE executes handover according to the configuration information in the handover command message.

In a process of implementing the present invention, the inventor finds that at least the following problem exists in the prior art:

After the target base station sends the handover request acknowledgement message that carries the configuration information used for handing over the UE and before the handover is performed on the UE, if the target base station changes the configuration information used by the target base station for handover, the UE does not know that the configuration information used by the target base station for handover has been changed because configuration information received by the UE is unchanged configuration information, but the UE still performs handover according to the received unchanged configuration information, thereby causing that the UE cannot normally access the target base station, increasing a handover delay, and affecting handover performance.

3GPP draft RAN WG2, R2-081641 "Discussion of the validation issue of HO CMD" by Huawei, XP050139363, discloses a discussion of the validation issue of the handover command. In particular, 3GPP draft R2-081641 suggests a validation of RACH information in the handover command.

3GPP draft RAN WG2, R2-081579 "BCCH modification period and paging period" by Panasonic, XP050139312, discusses how much configurability is required and proposes to decide a modification period by paging period.

### SUMMARY

In order to resolve a problem in the prior art, embodiments of the present invention defined in the claims provide a mobility management method, equipment, and system.

According to a first aspect, a mobility management method is provided, where the method includes:
receiving, by a target evolved NodeB eNB, a handover request sent by user equipment UE through a source eNB, where the handover request is used to hand over the UE from the source eNB to the target eNB; and
sending original configuration information and updated configuration information to the UE, so that the UE performs a handover operation through the original configuration information or the updated configuration information selected
from the received original configuration information and updated configuration information.

With reference to the first aspect, in a first possible implementation manner of the first aspect, the sending original configuration information and updated configuration information to the UE includes:
broadcasting a system message to the UE, where if the system message is an original system message, the system message carries the original configuration information; and if the system message is an updated system message, the system message carries the updated configuration information.

With reference to the first aspect, in a second possible implementation manner of the first aspect, the method further includes:
sending an updated tag to the UE through the source eNB, where the updated tag is used for the UE to select the original configuration information or the updated configuration information between the original configuration information and the updated configuration information to perform the handover operation according to the updated tag.

With reference to the first possible implementation manner of the first aspect, in a third possible implementation manner of the first aspect, if a change interval of the system message of the target eNB is different from a change interval of a system message of the source eNB, when the updated configuration information is sent to the UE through the source eNB, the change interval of the system message of the target eNB is further sent to the UE through the source eNB, where the change interval of the system message of the target eNB is used for the UE to perform the handover operation through the original configuration information or the updated configuration information selected from the received original configuration information and updated configuration information according to the change interval of the system message of the target eNB.

With reference to the first possible implementation manner of the first aspect, in a fourth possible implementation manner of the first aspect, if a change interval of the system message of the target eNB is different from a change interval of a system message of the source eNB, when the updated configuration information is sent to the UE through the source eNB, a change interval factor of the system message and a default paging cycle that are of the target eNB are further sent to the UE through the source eNB, where the change interval factor of the system message and the default paging cycle that are of the target eNB are used for the UE to perform the handover operation through the original configuration information or the updated configuration information selected from the received original configuration information and updated configuration information according to the change interval factor of the system message and the default paging cycle that are of the target eNB.

With reference to the third possible implementation manner of the first aspect or the fourth possible implementation manner of the first aspect, in a fifth possible implementation manner of the first aspect, if a system frame number SFN offset between the target eNB and the source eNB is non-zero, information about the SFN offset between the target eNB and the source eNB is further sent to the UE through the source eNB, where the information about the SFN offset between the target eNB and the source eNB is used for the UE to perform the handover operation through the original configuration information or the updated configuration information selected from the received original configuration information and updated configuration information according to the information about the SFN offset between the target eNB and the source eNB.

With reference to the first possible implementation manner of the first aspect, in a sixth possible implementation manner of the first aspect, if the system message is an original system message, the system message further includes a first tag; and if the system message is an updated system message, the system message further includes a second tag, where the first tag is used to indicate that the system message is the original system message, and the second tag is used to indicate that the system message is the updated system message; and
when an updated tag is sent to the UE through the source eNB, the updated tag is the same as the first tag.

According to a second aspect, a mobility management equipment is provided, where the equipment includes:
a receiving unit, configured to receive a handover request sent by user equipment UE through a source evolved NodeB eNB, where the handover request is used to hand over the UE from the source eNB to the target eNB; and
a first sending unit, configured to send original configuration information and updated configuration information to the UE, so that the UE performs a handover operation through the original configuration information or the updated configuration information selected from the received original configuration information and updated configuration information.

With reference to the second aspect, in a first possible implementation manner of the second aspect, the first sending unit is specifically configured to broadcast a system message to the UE, where if the system message is an original system message, the system message carries the original configuration information; and if the system message is an updated system message, the system message carries the updated configuration information.

With reference to the second aspect, in a second possible implementation manner of the second aspect, the equipment further includes:
a second sending unit, configured to send an updated tag to the UE through the source eNB, where the updated tag is used for the UE to select the original configuration information or the updated configuration information between the original configuration information and the updated configuration information to perform the handover operation according to the updated tag.

With reference to the first possible implementation manner of the second aspect, in a third possible implementation manner of the second aspect, if a change interval of the system message of the target eNB is different from a change interval of a system message of the source eNB, when sending the updated configuration information to the UE through the source eNB, the first sending unit further sends the change interval of the system message of the target eNB to the UE through the source eNB, where the change interval of the system message of the target eNB is used for the UE to perform the handover operation through the original configuration information or the updated configuration information selected from the received original configuration information and updated configuration information according to the change interval of the system message of the target eNB.

With reference to the first possible implementation manner of the second aspect, in a fourth possible implementation manner of the second aspect, if a change interval of the system message of the target eNB is different from a change interval of a system message of the source eNB, when sending the updated configuration information to the UE through the source eNB, the first sending unit further sends a change interval factor of the system message and a default paging cycle that are of the target eNB to the UE through the source eNB, where the change interval factor of the system message and the default paging cycle that are of the target eNB are used for the UE to perform the handover operation through the original configuration information or the updated configuration information selected from the received original configuration information and updated configuration information according to the change interval factor of the system message and the default paging cycle that are of the target eNB.

With reference to the third possible implementation manner of the second aspect or the fourth possible implementation manner of the second aspect, in a fifth possible implementation manner of the second aspect, if a system frame number SFN offset between the target eNB and the source eNB is non-zero, the first sending unit further sends information about the SFN offset between the target eNB and the source eNB to the UE through the source eNB, where the information about the SFN offset between the target eNB and the source eNB is used for the UE to perform the handover operation through the original configuration information or the updated configuration information selected from the received original configuration information and updated configuration information according to the information about the SFN offset between the target eNB and the source eNB.

With reference to the first possible implementation manner of the second aspect, in a sixth possible implementation manner of the second aspect, when the system message broadcasted by the first sending unit is an original system message, the system message further includes a first tag; or when the system message broadcasted by the first sending unit is an updated system message, the system message further includes a second tag, where the first tag is used to indicate that the system message is the original system message, and the second tag is used to indicate that the system message is the updated system message; and
when the second sending unit sends an updated tag, the updated tag is the same as the first tag.

According to a third aspect, a mobility management method is provided, where the method includes:
sending, by user equipment UE, a handover request to a target eNB through a source evolved NodeB eNB, where the handover request is used for requesting by the UE to be handed over from the source eNB to the target eNB;
receiving original configuration information and updated configuration information that are sent by the target eNB; and
performing a handover operation through the original configuration information or the updated configuration information selected from the received original configuration information and updated configuration information.

With reference to the third aspect, in a first possible implementation manner of the third aspect, the receiving original configuration information and updated configuration information that are sent by the target eNB includes:
receiving a system message broadcasted by the target eNB, where if the system message is an original system message, the system message carries the original configuration information; and if the system message is an updated system message, the system message carries the updated configuration information.

With reference to the third aspect, in a second possible implementation manner of the third aspect, the method further includes:
receiving, through the source eNB, an updated tag sent by the target eNB; and
the performing a handover operation through the original configuration information or the updated configuration information selected from the received original configuration information and updated configuration information includes:
   performing the handover operation through the original configuration information or the updated configuration information selected from the received original configuration information and updated configuration information according to the updated tag.

With reference to the first possible implementation manner of the third aspect, in a third possible implementation manner of the third aspect, if a change interval of the system message of the target eNB is different from a change interval of a system message of the source eNB, when the updated configuration information is received, the change interval of the system message of the target eNB is further received; and
the performing a handover operation through the original configuration information or the updated configuration information selected from the received original configuration information and updated configuration information includes:
   performing the handover operation through the original configuration information or the updated configuration information selected from the received original configuration information and updated configuration information according to a relationship between time of the handover operation and the change interval of the system message of the target eNB.

With reference to the first possible implementation manner of the third aspect, in a fourth possible implementation manner of the third aspect, if a change interval of the system message of the target eNB is different from a change interval of a system message of the source eNB, when the updated configuration information is received, a change interval factor of the system message and a default paging cycle that are of the target eNB are further received; and
the performing a handover operation through the original configuration information or the updated configuration information selected from the received original configuration information and updated configuration information includes:
   acquiring the change interval of the system message of the target eNB according to the change interval factor and the default paging cycle, and performing the handover operation through the original configuration information or the updated configuration information selected from the received original configuration information and updated configuration information according to time of the handover operation and the change interval of the system message of the target eNB.

With reference to the third possible implementation manner of the third aspect or the fourth possible implementation manner of the third aspect, in a fifth possible implementation manner of the third aspect, if a system frame number SFN offset between the target eNB and the source eNB is non-zero, information about the SFN offset between the target eNB and the source eNB is further received; and
the performing the handover operation through the original configuration information or the updated configuration information selected according to time of the handover operation and the change interval of the system message of the target eNB includes:
   performing the handover operation through the original configuration information or the updated configuration information selected according to the time of the handover operation, and the received or the acquired change interval of the system message of the target eNB, and the information about the SFN offset between the target eNB and the source eNB.

With reference to the first possible implementation manner of the third aspect, in a sixth possible implementation manner of the third aspect, if the system message received by the receiving unit is an original system message, the system message further includes a first tag; and if the system message received by the receiving unit is an updated system message, the system message further includes a second tag, where the first tag is used to indicate that the system message is the original system message, and the second tag is used to indicate that the system message is the updated system message; and
the performing a handover operation through the original configuration information or the updated configuration information selected from the received original configuration information and updated configuration information includes:
   if an updated tag sent by the target eNB is received, determining, by means of comparison, whether the received updated tag is the same as a tag in the received system message, where the updated tag is the same as the first tag; and
   if the updated tag is the same as the tag in the system message, performing the handover operation through the original configuration information; or
   if the updated tag is different from the tag in the system message, performing the handover operation through the updated configuration information. According to a fourth aspect, user equipment is provided, where the equipment includes:
      a sending unit, configured to send a handover request to a target eNB through a source evolved NodeB eNB, where the handover request is used for requesting by the UE to be handed over from the source eNB to the target eNB;
      a first receiving unit, configured to receive original configuration information and updated configuration information that are sent by the target eNB; and
      a handover unit, configured to perform a handover operation through the original configuration information or the updated configuration information selected from the original configuration information and updated configuration information that are received by the first receiving unit.

With reference to the fourth aspect, in a first possible implementation manner of the fourth aspect, the first receiving unit is specifically configured to receive a system message broadcasted by the target eNB, where if the system message is an original system message, the system message carries the original configuration information; and if the system message is an updated system message, the system message carries the updated configuration information.

With reference to the fourth aspect, in a second possible implementation manner of the fourth aspect, the equipment further includes:
a second receiving unit, configured to receive, through the source eNB, an updated tag sent by the target eNB; where
the handover unit is configured to perform the handover operation through the original configuration information or the updated configuration information selected from the received original configuration information and updated configuration information according to the updated tag received by the second receiving unit.

With reference to the first possible implementation manner of the fourth aspect, in a third possible implementation manner of the fourth aspect, if a change interval of the system message of the target eNB is different from a change interval of a system message of the source eNB, when the first receiving unit receives the updated configuration information, the first receiving unit further receives the change interval of the system message of the target eNB; and
the handover unit is specifically configured to perform the handover operation through the original configuration information or the updated configuration information selected according to a relationship between time of the handover operation and the change interval of the system message of the target eNB.

With reference to the first possible implementation manner of the fourth aspect, in a fourth possible implementation manner of the fourth aspect, if a change interval of the system message of the target eNB is different from a change interval of a system message of the source eNB, when the first receiving unit receives the updated configuration information, the first receiving unit further receives a change interval factor of the system message and a default paging cycle that are of the target eNB; and
the handover unit is specifically configured to acquire the change interval of the system message of the target eNB according to the change interval factor and the default paging cycle, and perform the handover operation through the original configuration information or the updated configuration information selected according to time of the handover operation and the change interval of the system message of the target eNB.

With reference to the third possible implementation manner of the fourth aspect or the fourth possible implementation manner of the fourth aspect, in a fifth possible implementation manner of the fourth aspect, if a system frame number SFN offset between the target eNB and the source eNB is non-zero, the handover command received by the first receiving unit further includes information about the SFN offset between the target eNB and the source eNB; and
the handover unit is specifically configured to perform the handover operation through the original configuration information or the updated configuration information selected according to the time of the handover operation, and the received or the acquired change interval of the system message of the target eNB, and the information about the SFN offset between the target eNB and the source eNB.

With reference to the first possible implementation manner of the fourth aspect, in a sixth possible implementation manner of the fourth aspect, if the system message received by the first receiving unit is an original system message, the system message further includes a first tag; and if the system message received by the first receiving unit is an updated system message, the system message further includes a second tag, where the first tag is used to indicate that the system message is the original system message, and the second tag is used to indicate that the system message is the updated system message; and
the handover unit is specifically configured to: when the second receiving unit receives an updated tag sent by the target eNB, determine, by means of comparison, whether the updated tag is the same as a tag in the system message received by the first receiving unit, and if the updated tag is the same as the tag in the system message, perform the handover operation according to the original configuration information; and if the updated tag is different from the tag in the system message, perform the handover operation according to the updated configuration information.

According to a fifth aspect, a mobility management system is provided, where the system includes a source base station eNB and a target eNB; where
the target eNB is the mobility management equipment according to the second aspect; and
the source eNB is configured to transfer information between the target eNB and the user equipment.

Beneficial effects of the technical solutions provided in the embodiments of the present invention are as follows:

A target eNB sends original configuration information and updated configuration information to UE, so that the UE performs a handover operation through the original configuration information or the updated configuration information selected from the received original configuration information and updated configuration information, thereby alleviating a problem, caused by a change of configuration information in a handover process, that the UE fails to be handed over and a handover delay is increased, and can further improve handover performance.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a mobility management method according to Embodiment 1 of the present invention;
FIG. 2 is a flowchart of another mobility management method according to Embodiment 1 of the present invention;
FIG. 3 is a schematic diagram of an application scenario of a mobility management method according to Embodiment 2 of the present invention;
FIG. 4 is a flowchart of a mobility management method according to Embodiment 2 of the present invention;
FIG. 5 is a schematic structural diagram of a first target evolved NodeB according to Embodiment 3 of the present invention;
FIG. 6 is a schematic structural diagram of a second target evolved NodeB according to Embodiment 3 of the present invention;
FIG. 7 is a schematic structural diagram of first user equipment according to Embodiment 4 of the present invention;
FIG. 8 is a schematic structural diagram of second user equipment according to Embodiment 4 of the present invention; and
FIG. 9 is a schematic structural diagram of a mobility management system according to Embodiment 5 of the present invention.

### DESCRIPTION OF EMBODIMENTS

To make the objectives, technical solutions, and advantages of the present invention clearer, the following further describes the embodiments of the present invention in detail with reference to the accompanying drawings.

### Embodiment 1

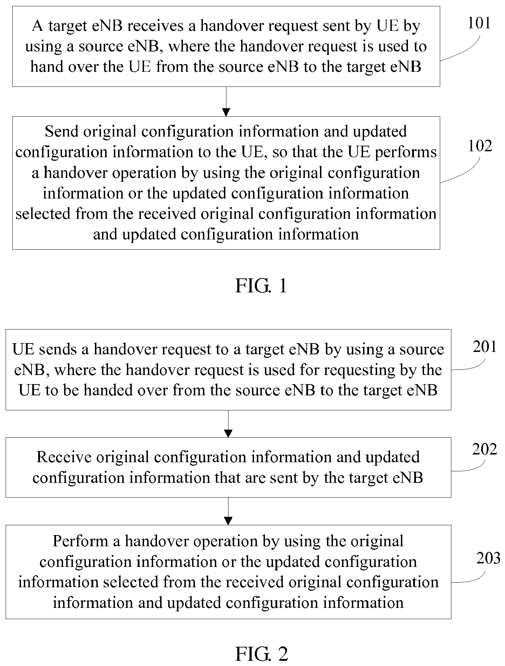

An embodiment provides a mobility management method. Referring to FIG. 1, a process of the method provided in this embodiment is specifically as follows:
101. A target eNB (Evolved Node B, evolved NodeB) receives a handover request sent by UE (User Equipment, user equipment) through a source eNB, where the handover request is used to hand over the UE from the source eNB to the target eNB.
102. Send original configuration information and updated configuration information to the UE, so that the UE performs a handover operation through the original configuration information or the updated configuration information selected from the received original configuration information and updated configuration information. This embodiment provides another mobility management method. Referring to FIG. 2, the method provided in this embodiment is specifically as follows:
201. UE sends a handover request to a target eNB through a source eNB, where the handover request is used for requesting by the UE to be handed over from the source eNB to the target eNB.
202. Receive original configuration information and updated configuration information that are sent by the target eNB.
203. Perform a handover operation through the original configuration information or the updated configuration information selected from the received original configuration information and updated configuration information.

In conclusion, according to the method provided in this embodiment, a target eNB sends original configuration information and updated configuration information to UE, so that the UE performs a handover operation through the original configuration information or the updated configuration information selected from the received original configuration information and updated configuration information, thereby alleviating a problem, caused by a change of configuration information in a handover process, that the UE fails to be handed over and a handover delay is increased, and further improving handover performance.

In order to describe more clearly the mobility management method provided in the foregoing embodiment, the following describes in detail the mobility management method with reference to content of the foregoing embodiment and through the following Embodiment 2 as an example. For details, refer to the following Embodiment 2.

### Embodiment 2

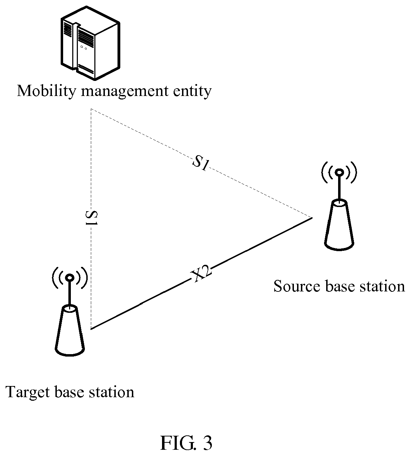

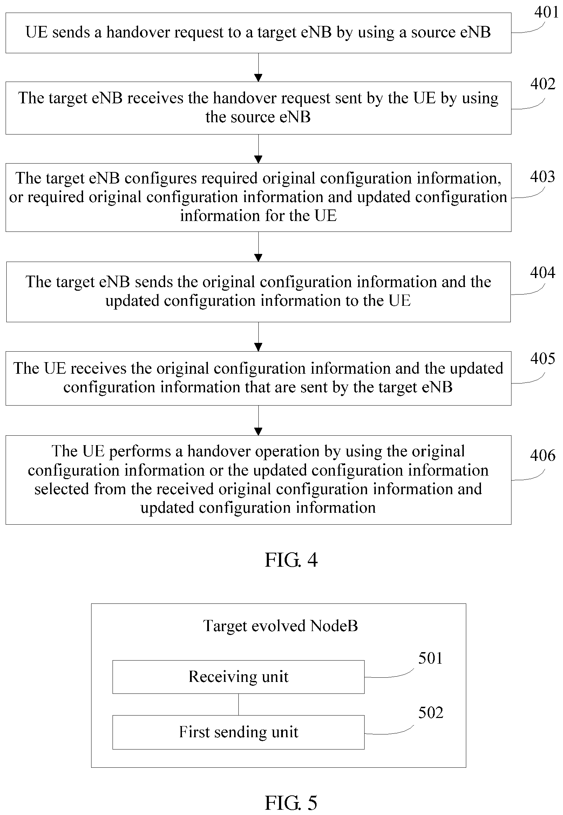

An embodiment provides a mobility management method. For ease of description, with reference to content of the foregoing embodiment, the method provided in this embodiment is described in detail in this embodiment through an example in which, as shown in FIG. 3, in an LTE (Long Term Evolution, Long Term Evolution) architecture scenario, a current serving eNB of UE is a source eNB and an eNB that is to become a serving eNB after the UE is handed over is a target eNB. Referring to FIG. 4, a process of the method provided in this embodiment is specifically as follows:
401. The UE sends a handover request to the target eNB through the source eNB.

As to this step, the UE may send a measurement report to the source eNB, where the measurement report includes a measurement result or measurement results of a serving cell and/or a neighboring cell. The source eNB performs a handover decision based on the measurement result or the measurement results that is or are reported by the UE, and sends the handover request to the target eNB, where the handover request is used for requesting by the UE to be handed over from the source eNB to the target eNB.

In addition, a handover decision basis for sending the handover request by the source eNB to the target eNB is not specifically limited in this embodiment, and includes but is not limited to determining according to a carrier signal level, for example, handover is performed when a carrier signal level of the source eNB is lower than a threshold level, or handover is performed when a carrier signal level of a neighboring eNB is higher than a threshold level, or handover is performed when a carrier signal level of a neighboring eNB is (to an extent) higher than a carrier signal level of the source eNB; or can also determine according to a carrier-to-interference ratio of a signal, for example, handover is performed when the carrier-to-interference ratio is lower than a threshold; or determining according to a distance between the UE and the source eNB, for example, handover is performed when the distance is greater than a threshold.

Specifically, for example, if a carrier signal level is -101 dBm, a threshold level is -100 dBm, and in this case, the carrier signal level is lower than the threshold level, handover is performed. Certainly, determining may also be performed according to the carrier-to-interference ratio of a signal, or the distance between the UE and the source base station, or another determining basis. A determining basis of whether to perform handover is not specifically limited in this embodiment. In addition to using the foregoing -100 dBm as an example, the carrier signal level or the threshold level may further be another value, such as -101 dBm or -99 dBm. A value of the threshold level is not limited in this embodiment.

In addition, when message communication is performed between the target eNB and the source eNB, communication may be directly performed through an X2 interface, or communication may be performed through an S1 interface through an MME (Mobility Management Entity, mobility management entity). For example, a handover request, a handover command, and the like, may all be directly sent and received through the X2 interface, or sent and received through the S1 interface through the MME to transfer. In this embodiment and subsequent embodiments, a communication manner of a message between the target eNB and the source eNB may use any one of the foregoing two communication manners, and is not specifically limited and described again. In this embodiment and the subsequent embodiments, a sending interface and a receiving interface that are used when communication is performed between the source eNB and the target eNB are a same interface. That is, if the source eNB sends a message to the target eNB through the X2 interface, a corresponding target eNB also receives, through the X2 interface, the message sent by the source eNB; the corresponding target eNB also sends a message to the source eNB through the X2 interface, and the source eNB also correspondingly receives, through the X2 interface, the message sent by the target eNB. If the source eNB sends a message to the target eNB through the S1 interface through the MME to transfer, the corresponding target eNB also receives, through the S1 interface through the MME to transfer, the message sent by the source eNB; the corresponding target eNB also sends a message to the source eNB through the S1 interface through the MME to transfer, and the source eNB also correspondingly receives, through the S1 interface through the MME to transfer, the message sent by the target eNB, which is not specifically limited and described again in this embodiment and the subsequent embodiments.

402. The target eNB receives the handover request sent by the UE through the source eNB.

Specifically, if the UE in FIG. 3 directly sends, through the X2 interface, the handover request through the source eNB, the target eNB directly receives, through the X2 interface, the handover request sent by the UE through the source eNB. If the UE in FIG. 3 sends, through the S1 interface through the MME to transfer, the handover request through the source eNB, the target eNB receives, through the S1 interface through the MME to transfer, the handover request sent by the UE through the source eNB. A receiving manner used by the target eNB is not specifically limited in this embodiment.

403. The target eNB configures required original configuration information, or required original configuration information and updated configuration information for the UE.

As to this step, the target eNB may configure the required original configuration information, or the required original configuration information and updated configuration information for the UE according to a relationship between time when the handover request is received and time when a system message is changed. The original configuration information is configuration information that is before the system message is changed, and the updated configuration information is configuration information that is after the system message is changed.

In specific implementation, that the target eNB configures the required original configuration information, or the required original configuration information and updated configuration information for the UE according to a relationship between time when the handover request is received and time when a system message is changed may include the following two cases:
Case 1: If the time when the target eNB receives the handover request occurs before the time when the system message is changed, the target eNB configures the required original configuration information and updated configuration information for the UE. FIG. 3 is used as an example. It is assumed that the time when the system message that is of the target eNB and relates to handover of the UE is changed is that SFN (System Frame Number, system frame number) = 256. When the time when the target eNB receives the handover request is before 256, such as 250, the target eNB configures the required original configuration information and updated configuration information for the UE. Certainly, in addition to being the foregoing 250 or 256, the time when the target eNB receives the handover request or the time when the system is changed may further be other time. A specific value of the time when the target eNB receives the handover request or the time when the system is changed is not specifically limited in this embodiment.
Case 2: If the time when the target eNB receives the handover request occurs at the time when the system message is changed, or the time when the target eNB receives the handover request occurs after the time when the system message is changed, the target eNB needs to configure only the required original configuration information for the UE.

FIG. 3 is still used as an example. It is assumed that the time when the system message that is of the target eNB and relates to handover of the UE is changed is that SFN = 256. If the time when the target eNB receives the handover request, for example, SFN = 256, occurs at the time when the system message is changed, or the time when the target eNB receives the handover request, for example, SFN = 257, occurs after the time when the system message is changed, the target eNB needs to configure only the required original configuration information for the UE, that is, configure changed configuration information when SFN = 256.

Further, in addition to the foregoing manner in which the target eNB configures the required original configuration information, or the required original configuration information and updated configuration information for the UE directly according to the relationship between the time when the handover request is received and the time when the system message is changed, in the method provided in this embodiment, a handover protection time may further be set on a target eNB side. That the target eNB configures the required original configuration information, or the required original configuration information and updated configuration information for the UE according to a relationship between time when the handover request is received and time when a system message is changed may further include the following three cases:
Case 1: If the time when the target eNB receives the handover request occurs before the time when the system message is changed, but does not exceed the set handover protection time, the target eNB configures the required original configuration information and updated configuration information for the UE.

An example in which the handover protection time that is set by the target eNB is 100 ms (a length of 10 frames) is used. It is assumed that the time when the system message that is of the target eNB and relates to handover of the UE is changed is that SFN = 256. When the time when the target eNB receives the handover request is before 256, such as 250, within the handover protection time ranging from 246 to 256, the target eNB configures the required original configuration information and updated configuration information for the UE. Certainly, in addition to being the foregoing 250 or 256, the time when the target eNB receives the handover request or the time when the system is changed may further be other time. A specific value of the time when the target eNB receives the handover request or the time when the system is changed is not specifically limited in this embodiment.

Case 2: If the time when the target eNB receives the handover request occurs before the time when the system message is changed, and exceeds the set handover protection time, the target eNB configures only the required original configuration information for the UE.

An example in which the handover protection time that is set by the target eNB is 100 ms (a length of 10 frames) is still used. It is assumed that the time when the system message that is of the target eNB and relates to handover of the UE is changed is that SFN = 256. When the time when the target eNB receives the handover request is before 256, such as 240, before the handover protection time 246, the target eNB configures, for the UE, the required original configuration information, that is, configuration information in the system message before 256. Certainly, in addition to being the foregoing 240 or 256, the time when the target eNB receives the handover request or the time when the system is changed may further be other time. A specific value of the time when the target eNB receives the handover request or the time when the system is changed is not specifically limited in this embodiment.

Case 3: If the time when the target eNB receives the handover request occurs at or after the time when the system message is changed, the target eNB configures the required original configuration information for the UE.

An example in which the handover protection time that is set by the target eNB is 100 ms (a length of 10 frames) is still used. It is assumed that the time when the system message that is of the target eNB and relates to handover of the UE is changed is that SFN = 256. When the time when the target eNB receives the handover request is 256 or 257, the target eNB configures, for the UE, the required original configuration information, that is, configuration information in the system message after 256. Certainly, in addition to being the foregoing 256, or 257, or 256, the time when the target eNB receives the handover request or the time when the system is changed may further be other time. A specific value of the time when the target eNB receives the handover request or the time when the system is changed is not specifically limited in this embodiment.

Further, the target eNB further periodically broadcasts configuration information through a system broadcast message, and a first system information block in the system broadcast message carries a ValueTag (tag). The ValueTag is used to mark whether configuration information broadcasted in a current broadcast message of a system is the same as configuration information broadcasted in a previous broadcast message. For example, a ValueTag carried in a first system information block in a previous system broadcast message is ValueTag1. If configuration information of a current system message of the target eNB is not changed, configuration information broadcasted by the target eNB through the system broadcast message this time is configuration information that is before the system message is changed and ValueTag1. If configuration information of a current system message of the target eNB is changed, configuration information broadcasted by the target eNB through the system broadcast message this time is configuration information that is after the system message is changed and ValueTag2. After subsequently receiving the broadcast message, the UE determines, through the ValueTag carried in the first system information block in the broadcast message, whether to reconfigure corresponding information.

Further, when the target eNB needs to configure the required updated configuration information for the UE, the updated configuration information may be a complete set of configuration information, and in addition to including changed configuration information, this complete set of configuration information further includes configuration information that is not changed compared with the original configuration information. For example, if the required original configuration information that is configured by the target eNB for the UE includes an uplink power control configuration parameter and an antenna configuration parameter, the uplink power control configuration parameter is subsequently changed, and the antenna configuration parameter is not changed, the required updated configuration information that is configured by the target eNB for the UE also includes the uplink power control configuration parameter and the antenna configuration parameter. However, a specific value of the uplink power control configuration parameter included in the updated configuration information is different from a specific value of the uplink power control configuration parameter included in the original configuration information, and a specific value of the antenna configuration parameter included in the updated configuration information is different from a specific value of the antenna configuration parameter included in the original configuration information.

In addition, the updated configuration information may also include only the changed configuration information. For example, if the required original configuration information that is configured by the target eNB for the UE includes an uplink power control configuration parameter and an antenna configuration parameter, the uplink power control configuration parameter is subsequently changed, and the antenna configuration parameter is not changed, the required updated configuration information that is configured by the target eNB for the UE includes only the uplink power control configuration parameter, and a specific value of the uplink power control configuration parameter included in the updated configuration information is different from a specific value of the uplink power control configuration parameter included in the original configuration information. Information included in the updated configuration information is not limited and described in this embodiment and the subsequent embodiments. In addition to the uplink power control configuration parameter and the antenna configuration parameter, content included in the configuration information may also be an uplink-downlink configuration parameter, or a configuration parameter for a physical uplink control channel, or another configuration parameter.

In addition, when the communication manner of a message between the target eNB and the source eNB is through the S1 interface through the MME, and if one or more pieces of required configuration information that is configured by the target eNB for the UE is or are configured by means of OAM (Operation Administration and Maintenance, operation, administration and maintenance), the target eNB needs to configure, for the UE, only other required configuration information except configuration information configured by means of OAM. For example, the required original configuration information or updated configuration information that is configured by the target eNB for the UE includes the uplink power control configuration parameter and the antenna configuration parameter, but the antenna configuration parameter is configured by means of OAM. When the target eNB receives, through the S1 interface through the MME to transfer, the handover request sent by the source eNB, the target eNB configures only the uplink power control configuration parameter in the required original configuration information or updated configuration information that is configured for the UE, and no longer configures the antenna configuration parameter, which is not specifically described again in this embodiment and the subsequent embodiments.

404. The target eNB sends the original configuration information and the updated configuration information to the UE.

As to this step, a specific manner in which the target eNB sends the original configuration information and the updated configuration information to the UE is not limited in this embodiment. For example, the specific manner in which the target eNB sends the original configuration information and the updated configuration information to the UE may be that the target eNB sends the original configuration information and the updated configuration information to the UE in a manner of sending a handover command to the UE through the source eNB.

As to the foregoing manner, information carried in the handover command that is sent by the target eNB to the UE through the source eNB includes the following three cases:
Case 1: The information carried in the handover command is the original configuration information and the updated configuration information.

In this case, according to a fact that whether an SFN offset between the target eNB and the source eNB is zero, and whether a change interval of the system message of the target eNB is the same as a change interval of a system message of the source eNB, the information carried in the handover command may be one of the following four types:
Type 1: When the SFN offset between the target eNB and the source eNB is zero, and the change interval of the system message of the target eNB is the same as the change interval of the system message of the source eNB, the information carried in the handover command includes the original configuration information and the updated configuration information.
Type 2: When the SFN offset between the target eNB and the source eNB is non-zero, and the change interval of the system message of the target eNB is the same as the change interval of the system message of the source eNB, the information carried in the handover command includes the original configuration information, the updated configuration information, and information about the SFN offset between the target eNB and the source eNB.
Type 3: When the SFN offset between the target eNB and the source eNB is zero, and the change interval of the system message of the target eNB is different from the change interval of the system message of the source eNB, the information carried in the handover command may be one of the following two forms:
   Form 1: The information carried in the handover command includes the original configuration information, the updated configuration information, and the change interval of the system message of the target eNB.
   Form 2: Because Change interval of a system message = Change interval factor of the system message x Default paging cycle, the information carried in the handover command includes the original configuration information, the updated configuration information, a change interval factor of the system message of the target eNB, and a default paging cycle of the target eNB.
Type 4: When the SFN offset between the target eNB and the source eNB is non-zero, and the change interval of the system message of the target eNB is different from the change interval of the system message of the source eNB, the information carried in the handover command may be one of the following two forms:
   Form 1: Updated information is the updated configuration information, the change interval of the system message of the target eNB, and information about the SFN offset between the target eNB and the source eNB. The information carried in the handover command includes the original configuration information, the updated configuration information, the change interval of the system message of the target eNB, and the information about the SFN offset between the target eNB and the source eNB.
   Form 2: Because Change interval of a system message = Change interval factor of the system message x Default paging cycle, updated information is the updated configuration information, a change interval factor of the system message of the target eNB, a default paging cycle of the target eNB, and information about the SFN offset between the target eNB and the source eNB. The information carried in the handover command includes the original configuration information, the updated configuration information, the change interval factor of the system message of the target eNB, the default paging cycle of the target eNB, and the information about the SFN offset between the target eNB and the source eNB.

Case 2: The information carried in the handover command is the original configuration information, the updated configuration information, and an updated ValueTag.

The updated ValueTag is a ValueTag that is carried in the first system information block in the system message broadcasted when the system broadcast message is an original system message, and the updated ValueTag is a basis for the UE to select the original configuration information or the updated configuration information for performing a handover operation.

Case 3: The information carried in the handover command is the original configuration information and an updated ValueTag.

The updated ValueTag is a ValueTag that is carried in the first system information block in the system message broadcasted when the system broadcast message is an original system message.

405. The UE receives the original configuration information and the updated configuration information that are sent by the target eNB.

As to this step, if the target eNB sends the original configuration information and the updated configuration information to the UE in the manner of sending the handover command to the UE through the source eNB in step 404, the UE receives, in a manner in which the handover command sent by the target eNB is received through the source eNB, the original configuration information and the updated configuration information that are sent by the target eNB.

Specifically, if the target eNB directly sends the handover command to the UE through the source eNB and through the X2 interface in FIG. 3, the UE directly receives, through the X2 interface, the handover command that is sent by the target eNB through the source eNB. If the target eNB sends, through the S1 interface through the MME to transfer, the handover command to the UE through the source eNB, the UE receives, through the S1 interface through the MME to transfer, the handover command that is sent by the target eNB through the source eNB. A receiving manner used by the UE is not specifically limited in this embodiment.

406. The UE performs a handover operation through the original configuration information or the updated configuration information selected from the received original configuration information and updated configuration information.

As to this step, if the UE receives, in the manner in which the handover command sent by the target eNB is received through the source eNB, the original configuration information and the updated configuration information that are sent by the target eNB in step 405, information carried in the handover command received by the UE includes one of the following three cases:
Case 1: The handover command carries the original configuration information and the updated configuration information.

As to this case, the UE performs the handover operation through the original configuration information or performs the handover operation through the updated configuration information selected according to time of the handover operation. If the time when the UE performs the handover operation is before the time when the system message of the target eNB is changed, the handover operation is performed through the original configuration information. If the time when the UE performs the handover operation is after the time when the system message of the target eNB is changed, the handover operation is performed through the updated configuration information.

The UE may determine, in one of the following four manners, a relationship between the time when the UE performs the handover operation and the time when the system message of the target eNB is changed.

### Case 1 of Manner 1:

If the handover command received by the UE includes the change interval of the system message of the target eNB, and the handover command received by the UE further includes the information about the SFN offset between the target eNB and the source eNB, an SFN of the source eNB is read; an SFN of the target eNB is determined according to the information about the SFN offset between the target eNB and the source eNB; and an accurate time point when the system message of the target eNB is changed is determined according to the change interval of the system message of the target eNB and the SFN of the target eNB. If the time when the UE performs the handover operation is before the accurate time point when the system message of the target eNB is changed, the handover operation is performed through the original configuration information. If the time when the UE performs the handover operation is the same as the accurate time point when the system message of the target eNB is changed, or the time when the UE performs the handover operation is after the accurate time point when the system message of the target eNB is changed, the handover operation is performed through the updated configuration information.

For example, if the change interval that is of the system message of the target eNB and included in the handover command received by the UE is 256 SFNs, and the information that is about the SFN offset between the target eNB and the source eNB and included in the handover command received by the UE is 2, the SFN of the source eNB is read as 254; it is determined, according to the information 2 about the SFN offset between the target eNB and the source eNB, that the SFN of the target eNB is equal to 256, that is, the SFN 254 of the source eNB is corresponding to the SFN 256 of the target eNB; and it is determined, according to the change interval 256 of the system message of the target eNB and the SFN 256 of the target eNB, that the accurate time point when the system message of the target eNB is changed is the SFN 256 of the target eNB, that is, the SFN 254 of the source eNB. If the time when the UE performs the handover operation is 250, and is before the accurate time point, that is, the SFN 254 of the source eNB, when the system message of the target eNB is changed, the handover operation is performed through the original configuration information. If the time when the UE performs the handover operation is 254, and is the same as the accurate time point, that is, the SFN 254 of the source eNB, when the system message of the target eNB is changed, the handover operation is performed through the updated configuration information. If the time when the UE performs the handover operation is 255, and is after the accurate time point, that is, the SFN 254 of the source eNB, when the system message of the target eNB is changed, the handover operation is performed through the updated configuration information.

### Case 2 of Manner 1:

If the handover command received by the UE includes the change interval of the system message of the target eNB, and the handover command received by the UE does not include the information about the SFN offset between the target eNB and the source eNB, an SFN of the source eNB is read; and an accurate time point when the system message of the target eNB is changed is determined according to the change interval of the system message of the target eNB and the SFN of the source eNB. If the time when the UE performs the handover operation is before the accurate time point when the system message of the target eNB is changed, the handover operation is performed through the original configuration information. If the time when the UE performs the handover operation is the same as the accurate time point when the system message of the target eNB is changed, or the time when the UE performs the handover operation is after the accurate time point when the system message of the target eNB is changed, the handover operation is performed through the updated configuration information.

For example, if the change interval that is of the system message of the target eNB and included in the handover command received by the UE is 256 frames, and the handover command received by the UE does not include the information about the SFN offset between the target eNB and the source eNB, the SFN of the source eNB is read as 256; and it is determined, according to the change interval 256 of the system message of the target eNB and the SFN 256 of the source eNB, that the accurate time point when the system message of the target eNB is changed is the SFN 256 of the source eNB. If the time when the UE performs the handover operation is 250, and is before the accurate time point, that is, the SFN 256 of the source eNB, when the system message of the target eNB is changed, the handover operation is performed through the original configuration information. If the time when the UE performs the handover operation is 256, and is the same as the accurate time point, that is, the SFN 256 of the source eNB, when the system message of the target eNB is changed, the handover operation is performed through the updated configuration information. If the time when the UE performs the handover operation is 257, and is after the accurate time point, that is, the SFN 256 of the source eNB, when the system message of the target eNB is changed, the handover operation is performed through the updated configuration information.

### Case 1 of Manner 2:

If the handover command received by the UE includes the change interval factor of the system message of the target eNB and the default paging cycle, and the handover command received by the UE further includes the information about the SFN offset between the target eNB and the source eNB, an SFN of the source eNB is read, and an SFN of the target eNB is determined according to the information about the SFN offset between the target eNB and the source eNB; the change interval of the system message of the target eNB is obtained by multiplying the change interval factor of the system message of the target eNB by the default paging cycle; and an accurate time point when the system message of the target eNB is changed is determined according to the change interval of the system message of the target eNB and the SFN of the target eNB. If the time when the UE performs the handover operation is before the accurate time point when the system message of the target eNB is changed, the handover operation is performed through the original configuration information. If the time when the UE performs the handover operation is the same as the accurate time point when the system message of the target eNB is changed, or the time when the UE performs the handover operation is after the accurate time point when the system message of the target eNB is changed, the handover operation is performed through the updated configuration information.

For example, if the handover command received by the UE includes the change interval factor 4 of the system message of the target eNB and the default paging cycle 64, and the information about the SFN offset that is between the target eNB and the source eNB and included in the handover command received by the UE is 2, the SFN of the source eNB is read as 254, and it is determined, according to the information 2 about the SFN offset between the target eNB and the source eNB, that the SFN of the target eNB is equal to 256, that is, the SFN 254 of the source eNB is corresponding to the SFN 256 of the target eNB; the change interval 256 of the system message of the target eNB is obtained by multiplying the change interval factor 4 of the system message of the target eNB by the default paging cycle 64; and it is determined, according to the change interval 256 of the system message of the target eNB and the SFN 256 of the target eNB, that the accurate time point when the system message of the target eNB is changed is the SFN 256 of the target eNB, that is, the SFN 254 of the source eNB. If the time when the UE performs the handover operation is 250, and is before the accurate time point, that is, the SFN 254 of the source eNB, when the system message of the target eNB is changed, the handover operation is performed through the original configuration information. If the time when the UE performs the handover operation is 254, and is the same as the accurate time point, that is, the SFN 254 of the source eNB, when the system message of the target eNB is changed, the handover operation is performed through the updated configuration information. If the time when the UE performs the handover operation is 255, and is after the accurate time point, that is, the SFN 254 of the source eNB, when the system message of the target eNB is changed, the handover operation is performed through the updated configuration information.

### Case 2 of Manner 2:

If the handover command received by the UE includes the change interval factor of the system message of the target eNB and the default paging cycle, and the handover command received by the UE does not include the information about the SFN offset between the target eNB and the source eNB, an SFN of the source eNB is read; the change interval of the system message of the target eNB is obtained by multiplying the change interval factor of the system message of the target eNB by the default paging cycle; and an accurate time point when the system message of the target eNB is changed is determined according to the change interval of the system message of the target eNB and the SFN of the source eNB. If the time when the UE performs the handover operation is before the accurate time point when the system message of the target eNB is changed, the handover operation is performed through the original configuration information. If the time when the UE performs the handover operation is the same as the accurate time point when the system message of the target eNB is changed, or the time when the UE performs the handover operation is after the accurate time point when the system message of the target eNB is changed, the handover operation is performed through the updated configuration information.

For example, if the handover command received by the UE includes the change interval factor 4 of the system message of the target eNB and the default paging cycle 64, and the handover command received by the UE does not include the information about the SFN offset between the target eNB and the source eNB, the SFN of the source eNB is read as 256; the change interval 256 of the system message of the target eNB is obtained by multiplying the change interval factor 4 of the system message of the target eNB by the default paging cycle 64; and it is determined, according to the change interval 256 of the system message of the target eNB and the SFN 256 of the source eNB, that the accurate time point when the system message of the target eNB is changed is the SFN 256 of the source eNB. If the time when the UE performs the handover operation is 250, and is before the accurate time point, that is, the SFN 256 of the source eNB, when the system message of the target eNB is changed, the handover operation is performed through the original configuration information. If the time when the UE performs the handover operation is 256, and is the same as the accurate time point, that is, the SFN 256 of the source eNB, when the system message of the target eNB is changed, the handover operation is performed through the updated configuration information. If the time when the UE performs the handover operation is 257, and is after the accurate time point, that is, the SFN 256 of the source eNB, when the system message of the target eNB is changed, the handover operation is performed through the updated configuration information.

### Manner 3:

If the handover command received by the UE includes neither the change interval of the system message of the target eNB, nor the change interval factor of the system message of the target eNB and the default paging cycle, but the handover command received by the UE includes the information about the SFN offset between the target eNB and the source eNB, an SFN of the source eNB is read, and an SFN of the target eNB is determined according to the information about the SFN offset between the target eNB and the source eNB; the change interval of the system message of the source eNB is read; and an accurate time point when the system message of the target eNB is changed is determined according to the change interval of the system message of the source eNB and the SFN of the target eNB. If the time when the UE performs the handover operation is before the accurate time point when the system message of the target eNB is changed, the handover operation is performed through the original configuration information. If the time when the UE performs the handover operation is the same as the accurate time point when the system message of the target eNB is changed, or the time when the UE performs the handover operation is after the accurate time point when the system message of the target eNB is changed, the handover operation is performed through the updated configuration information.

For example, if the handover command received by the UE includes neither the change interval of the system message of the target eNB, nor the change interval factor of the system message of the target eNB and the default paging cycle, but the information about the SFN offset that is between the target eNB and the source eNB and included in the handover command received by the UE is 2, the SFN of the source eNB is read as 254, and it is determined, according to the information 2 about the SFN offset between the target eNB and the source eNB, that the SFN of the target eNB is 256, that is, the SFN 254 of the source eNB is corresponding to the SFN 256 of the target eNB; the change interval of the system message of the source eNB is read as 256; and it is determined, according to the change interval 256 of the system message of the source eNB and the SFN 256 of the target eNB, that the accurate time point when the system message of the target eNB is changed is the SFN 256 of the target eNB, that is, the SFN 254 of the source eNB. If the time when the UE performs the handover operation is 250, and is before the accurate time point, that is, the SFN 254 of the source eNB, when the system message of the target eNB is changed, the handover operation is performed through the original configuration information. If the time when the UE performs the handover operation is 254, and is the same as the accurate time point, that is, the SFN 254 of the source eNB, when the system message of the target eNB is changed, the handover operation is performed through the updated configuration information. If the time when the UE performs the handover operation is 255, and is after the accurate time point, that is, the SFN 254 of the source eNB, when the system message of the target eNB is changed, the handover operation is performed through the updated configuration information.

### Manner 4:

If the handover command received by the UE includes only the original configuration information and the updated configuration information, an SFN of the source eNB and the change interval of the system message of the source eNB are read; and an accurate time point when the system message of the target eNB is changed is determined according to the change interval of the system message of the source eNB and the SFN of the source eNB. If the time when the UE performs the handover operation is before the accurate time point when the system message of the target eNB is changed, the handover operation is performed through the original configuration information. If the time when the UE performs the handover operation is the same as the accurate time point when the system message of the target eNB is changed, or the time when the UE performs the handover operation is after the accurate time point when the system message of the target eNB is changed, the handover operation is performed through the updated configuration information.

For example, if the handover command received by the UE includes only the original configuration information and the updated configuration information, the SFN of the source eNB is read as 256 and the change interval of the system message of the source eNB is read as 256; and it is determined, according to the change interval 256 of the system message of the source eNB and the SFN 256 of the source eNB, that the accurate time point when the system message of the target eNB is changed is the SFN 256 of the source eNB. If the time when the UE performs the handover operation is 250, and is before the accurate time point, that is, the SFN 256 of the source eNB, when the system message of the target eNB is changed, the handover operation is performed through the original configuration information. If the time when the UE performs the handover operation is 256, and is the same as the accurate time point, that is, the SFN 256 of the source eNB, when the system message of the target eNB is changed, the handover operation is performed through the updated configuration information. If the time when the UE performs the handover operation is 257, and is after the accurate time point, that is, the SFN 256 of the source eNB, when the system message of the target eNB is changed, the handover operation is performed through the updated configuration information.

Case 2: The handover command carries the original configuration information, the updated configuration information, and an updated ValueTag.

When performing the handover operation, the UE reads a ValueTag carried in the first system information block in the configuration information broadcasted through the system broadcast message. Because the ValueTag is used to mark whether the configuration information broadcasted in the current broadcast message is the same as the configuration information broadcasted in the previous broadcast message, the handover operation may be performed through the original configuration information or the updated configuration information selected by determining, by means of comparison, whether the updated ValueTag carried in the handover command received by the UE is the same as the ValueTag carried in the first system information block in the configuration information broadcasted through the broadcast message. If the updated ValueTag carried in the handover command received by the UE is the same as the ValueTag carried in the first system information block in the configuration information broadcasted through the broadcast message, it indicates that current configuration information of the system message of the target eNB is not changed compared with configuration information that exists when the target eNB sends the handover command, and the handover operation is performed through the original configuration information. If the updated ValueTag carried in the handover command received by the UE is different from the ValueTag carried in the first system information block in the configuration information broadcasted through the broadcast message, it indicates that the current configuration information of the system message of the target eNB has been changed compared with the configuration information that exists when the target eNB sends the handover command, and the handover operation is performed through the updated configuration information.

For example, when the UE performs the handover operation, and if the ValueTag carried in the first system information block in the configuration information broadcasted through the system broadcast message is read as ValueTag1, the updated ValueTag carried in the handover command received by the UE is ValueTag1, and the updated ValueTag carried in the handover command received by the UE and the ValueTag carried in the first system information block in the configuration information broadcasted through the broadcast message are same ValueTag1, the handover operation is performed through the original configuration information. If the ValueTag carried in the first system information block in the configuration information broadcasted through the system broadcast message is read as ValueTag2, the updated ValueTag carried in the handover command received by the UE is ValueTag1, and the updated ValueTag carried in the handover command received by the UE and the ValueTag carried in the first system information block in the configuration information broadcasted through the broadcast message are different, the handover operation is performed through the updated configuration information. Case 3: The handover command carries the original configuration information and an updated ValueTag.

When performing the handover operation, the UE reads a ValueTag carried in the first system information block in the configuration information broadcasted through the system broadcast message. Because the ValueTag is used to mark whether, in a system, the configuration information broadcasted in the current broadcast message is the same as the configuration information broadcasted in the previous broadcast message, whether the handover operation is performed through the original configuration information may be determined by determining, by means of comparison, whether the updated ValueTag carried in the handover command received by the UE is the same as the ValueTag carried in the first system information block in the configuration information broadcasted through the broadcast message. If the updated ValueTag carried in the handover command received by the UE is the same as the ValueTag carried in the first system information block in the configuration information broadcasted through the broadcast message, it indicates that current configuration information of the system message of the target eNB is not changed compared with configuration information that exists when the target eNB sends the handover command, and the handover operation is performed through the original configuration information. If the updated ValueTag carried in the handover command received by the UE is different from the ValueTag carried in the first system information block in the configuration information broadcasted through the broadcast message, it indicates that the current configuration information of the system message of the target eNB has been changed compared with the configuration information that exists when the target eNB sends the handover command, and then the UE acquires the configuration information broadcasted through the system broadcast message, and performs the handover operation through the acquired configuration information broadcasted through the system broadcast message.

For example, when the UE performs the handover operation, and if the ValueTag carried in the first system information block in the configuration information broadcasted through the system broadcast message is read as ValueTag1, the updated ValueTag carried in the handover command received by the UE is ValueTag1, and the updated ValueTag carried in the handover command received by the UE and the ValueTag carried in the first system information block in the configuration information broadcasted through the broadcast message are same ValueTag1, the handover operation is performed through the original configuration information. If the ValueTag carried in the first system information block in the configuration information broadcasted through the system broadcast message is read as ValueTag2, the updated ValueTag carried in the handover command received by the UE is ValueTag1, and the updated ValueTag carried in the handover command received by the UE and the ValueTag carried in the first system information block in the configuration information broadcasted through the broadcast message are different, the configuration information broadcasted through the system broadcast message is acquired, and the handover operation is performed through the acquired configuration information broadcasted through the system broadcast message.

In conclusion, according to the method provided in this embodiment, a target eNB sends original configuration information and updated configuration information to UE, so that the UE performs a handover operation through the original configuration information or the updated configuration information selected from the received original configuration information and updated configuration information, thereby alleviating a problem, caused by a change of configuration information in a handover process, that the UE fails to be handed over and a handover delay is increased, and further improving handover performance.

### Embodiment 3

An embodiment provides a mobility management equipment, and the equipment is configured to execute functions executed by the target eNB that implements the mobility management method provided in the foregoing Embodiment 1 or Embodiment 2. Referring to FIG. 5, the equipment includes:
a receiving unit 501, configured to receive a handover request sent by UE through a source eNB, where the handover request is used to hand over the UE from the source eNB to a target eNB; and
a first sending unit 502, configured to send original configuration information and updated configuration information to the UE, so that the UE performs a handover operation through the original configuration information or the updated configuration information selected from the received original configuration information and updated configuration information.

Further, the first sending unit 502 is specifically configured to broadcast a system message to the UE, where if the system message is an original system message, the system message carries the original configuration information; and if the system message is an updated system message, the system message carries the updated configuration information.

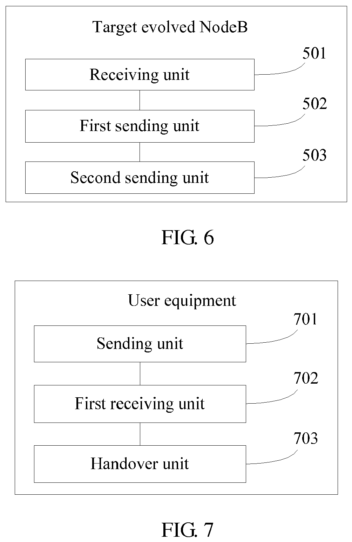

Referring to FIG. 6, the equipment further includes:
a second sending unit 503, configured to send an updated tag to the UE through the source eNB, where the updated tag is used for the UE to select the original configuration information or the updated configuration information between the original configuration information and the updated configuration information to perform the handover operation according to the updated tag.

If a change interval of the system message of the target eNB is different from a change interval of a system message of the source eNB, when sending the updated configuration information to the UE through the source eNB, the first sending unit 502 further sends the change interval of the system message of the target eNB in the handover command to the UE through the source eNB, where the change interval of the system message of the target eNB is used for the UE to perform the handover operation through the original configuration information or the updated configuration information selected from the received original configuration information and updated configuration information according to the change interval of the system message of the target eNB.

If a change interval of the system message of the target eNB is different from a change interval of a system message of the source eNB, when sending the updated configuration information to the UE through the source eNB, the first sending unit 502 further sends a change interval factor of the system message and a default paging cycle that are of the target eNB to the UE through the source eNB, where the change interval factor of the system message and the default paging cycle that are of the target eNB are used for the UE to perform the handover operation through the original configuration information or the updated configuration information selected from the received original configuration information and updated configuration information according to the change interval factor of the system message and the default paging cycle that are of the target eNB.

If an SFN offset between the target eNB and the source eNB is non-zero, the first sending unit 502 further sends information about the SFN offset between the target eNB and the source eNB to the UE through the source eNB, where the information about the SFN offset between the target eNB and the source eNB is used for the UE to perform the handover operation through the original configuration information or the updated configuration information selected from the received original configuration information and updated configuration information according to the information about the SFN offset between the target eNB and the source eNB.

When the system message broadcasted by the first sending unit 502 is an original system message, the system message further includes a first tag; or when the system message broadcasted by the first sending unit 502 is an updated system message, the system message further includes a second tag, where the first tag is used to indicate that the system message is the original system message, and the second tag is used to indicate that the system message is the updated system message; and
when the second sending unit 503 sends an updated tag, the updated tag is the same as the first tag.

In conclusion, according to the equipment provided in this embodiment, a sending unit of a target eNB sends original configuration information and updated configuration information to UE, so that the UE performs a handover operation through the original configuration information or the updated configuration information selected from the received original configuration information and updated configuration information, thereby alleviating a problem, caused by a change of configuration information in a handover process, that the UE fails to be handed over and a handover delay is increased, and further improving handover performance.

### Embodiment 4

An embodiment provides a mobility management equipment, and the equipment is configured to execute functions executed by the UE that implements the mobility management method provided in the foregoing Embodiment 1 or Embodiment 2. Referring to FIG. 7, the equipment includes:
a sending unit 701, configured to send a handover request to a target eNB through a source eNB, where the handover request is used for requesting by the UE to be handed over from the source eNB to the target eNB;
a first receiving unit 702, configured to receive original configuration information and updated configuration information that are sent by the target eNB; and
a handover unit 703, configured to perform a handover operation through the original configuration information or the updated configuration information selected from the original configuration information and updated configuration information that are received by the first receiving unit 702.

Further, the first sending unit 702 is specifically configured to receive a system message broadcasted by the target eNB, where if the system message is an original system message, the system message carries the original configuration information; and if the system message is an updated system message, the system message carries the updated configuration information.

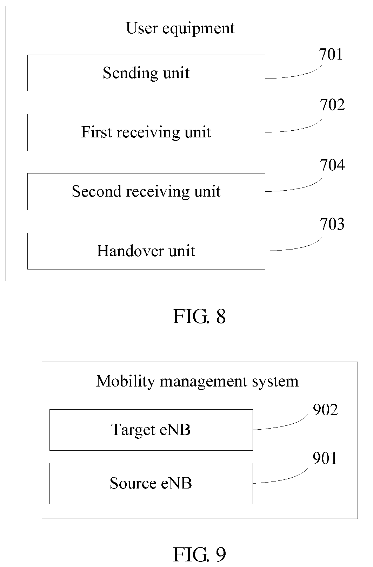

Referring to FIG. 8, the equipment further includes:
a second receiving unit 704, configured to receive, through the source eNB, an updated tag sent by the target eNB; where
the handover unit 703 specifically performs the handover operation through the original configuration information or the updated configuration information selected from the received original configuration information and updated configuration information according to the updated tag received by the second receiving unit 704.

If a change interval of the system message of the target eNB is different from a change interval of a system message of the source eNB, when the first receiving unit 702 receives an updated information which is the updated configuration information, the first receiving unit 702 further receives the change interval of the system message of the target eNB; and the handover unit 703 is specifically configured to perform the handover operation through the original configuration information or the updated configuration information selected according to a relationship between time of the handover operation and the change interval of the system message of the target eNB.

If a change interval of the system message of the target eNB is different from a change interval of a system message of the source eNB, when the first receiving unit 702 receives the updated configuration information, the first receiving unit 702 further receives a change interval factor of the system message and a default paging cycle that are of the target eNB; and the handover unit 703 is specifically configured to acquire the change interval of the system message of the target eNB according to the change interval factor and the default paging cycle, and perform the handover operation through the original configuration information or the updated configuration information selected according to time of the handover operation and the change interval of the system message of the target eNB.

If an SFN offset between the target eNB and the source eNB is non-zero, the first receiving unit 702 further receives information about the SFN offset between the target eNB and the source eNB; and the handover unit 703 is specifically configured to perform the handover operation through the original configuration information or the updated configuration information selected according to the time of the handover operation, and the received or the acquired change interval of the system message of the target eNB, and the information about the SFN offset between the target eNB and the source eNB.

If the system message received by the first receiving unit 702 is an original system message, the system message further includes a first tag; and if the system message received by the first receiving unit 702 is an updated system message, the system message further includes a second tag, where the first tag is used to indicate that the system message is the original system message, and the second tag is used to indicate that the system message is the updated system message; and the handover unit 703 is specifically configured to: when a second receiving unit 704 receives an updated tag sent by the target eNB, determine, by means of comparison, whether the updated tag is the same as a tag in the system message received by the first receiving unit 702, and if the updated tag is the same as the tag in the system message, perform the handover operation according to the original configuration information; and if the updated tag is different from the tag in the system message, perform the handover operation according to the updated configuration information.

In conclusion, according to the equipment provided in this embodiment, after receiving original configuration information and updated configuration information that are sent by a target eNB to UE, a first receiving unit of the UE performs a handover operation through the original configuration information or the updated configuration information selected from the received original configuration information and updated configuration information, thereby alleviating a problem, caused by a change of configuration information in a handover process, that the UE fails to be handed over and a handover delay is increased, and further improving handover performance.

### Embodiment 5

An embodiment provides a mobility management system, and the system is configured to execute the mobility management method provided in the foregoing Embodiment 1 to Embodiment 4. Referring to FIG. 9, the system includes:
a source eNB 901 and a target eNB 902, where
the target eNB 902 is the equipment provided in the foregoing Embodiment 3, and for details, refer to the foregoing Embodiment 3; and
the source eNB 901 is configured to transfer information between the eNB 902 and UE.

In conclusion, according to the system provided in this embodiment, a target eNB sends original configuration information and updated configuration information to UE, so that the UE performs a handover operation through the original configuration information or the updated configuration information selected from the received original configuration information and updated configuration information, thereby alleviating a problem, caused by a change of configuration information in a handover process, that the UE fails to be handed over and a handover delay is increased, and further improving handover performance.

### Embodiment 6

An embodiment provides a mobility management equipment, and the equipment includes:
a receiver, configured to receive a handover request sent by user equipment UE through a source eNB, where the handover request is used to hand over the UE from the source eNB to a target eNB; and
a transmitter, configured to send original configuration information and updated configuration information to the UE, so that the UE performs a handover operation through the original configuration information or the updated configuration information selected from the received original configuration information and updated configuration information.

The transmitter is further configured to broadcast a system message to the UE, where if the system message is an original system message, the system message carries the original configuration information; and if the system message is an updated system message, the system message carries the updated configuration information.

Further, the transmitter is further configured to send an updated tag to the UE through the source eNB, where the updated tag is used for the UE to select the original configuration information or the updated configuration information between the original configuration information and the updated configuration information to perform the handover operation according to the updated tag.

If a change interval of the system message of the target eNB is different from a change interval of a system message of the source eNB, when the updated configuration information is sent to the UE through the source eNB, the change interval of the system message of the target eNB is further sent to the UE through the source eNB, where the change interval of the system message of the target eNB is used for the UE to perform the handover operation through the original configuration information or the updated configuration information selected from the received original configuration information and updated configuration information according to the change interval of the system message of the target eNB. If a change interval of the system message of the target eNB is different from a change interval of a system message of the source eNB, when the updated configuration information is sent to the UE through the source eNB, a change interval factor of the system message and a default paging cycle that are of the target eNB are further sent to the UE through the source eNB, where the change interval factor of the system message and the default paging cycle that are of the target eNB are used for the UE to perform the handover operation through the original configuration information or the updated configuration information selected from the received original configuration information and updated configuration information according to the change interval factor of the system message and the default paging cycle that are of the target eNB. If an SFN offset between the target eNB and the source eNB is non-zero, information about the SFN offset between the target eNB and the source eNB is further sent to the UE through the source eNB, where the information about the SFN offset between the target eNB and the source eNB is used for the UE to perform the handover operation through the original configuration information or the updated configuration information selected from the received original configuration information and updated configuration information according to the information about the SFN offset between the target eNB and the source eNB. If the system message is an original system message, the system message further includes a first tag; and if the system message is an updated system message, the system message further includes a second tag, where the first tag is used to indicate that the system message is the original system message, and the second tag is used to indicate that the system message is the updated system message; and when an updated tag is sent to the UE through the source eNB, the updated tag is the same as the first tag.

In conclusion, according to the equipment provided in this embodiment, a target eNB sends original configuration information and updated configuration information to UE, so that the UE performs a handover operation through the original configuration information or the updated configuration information selected from the received original configuration information and updated configuration information, thereby alleviating a problem, caused by a change of configuration information in a handover process, that the UE fails to be handed over and a handover delay is increased, and further improving handover performance.

### Embodiment 7

An embodiment provides a mobility management equipment, and the equipment includes:
a transmitter, configured to send a handover request to a target eNB through a source eNB, where the handover request is used for requesting by UE to be handed over from the source eNB to the target eNB;
a receiver, configured to receive original configuration information and updated configuration information that are sent by the target eNB; and
a processor, configured to perform a handover operation through the original configuration information or the updated configuration information selected from the received original configuration information and updated configuration information.

Further, the receiver is further configured to receive a system message broadcasted by the target eNB, where if the system message is an original system message, the system message carries the original configuration information; and if the system message is an updated system message, the system message carries the updated configuration information.

Further, the transmitter is further configured to receive, through the source eNB, an updated tag sent by the target eNB.

Further, the processor is further configured to perform the handover operation through the original configuration information or the updated configuration information selected from the received original configuration information and updated configuration information according to the updated tag.

If a change interval of the system message of the target eNB is different from a change interval of a system message of the source eNB, when the updated configuration information is received, the change interval of the system message of the target eNB is further received; and the processor is further configured to perform the handover operation through the original configuration information or the updated configuration information selected from the received original configuration information and updated configuration information according to a relationship between time of the handover operation and the change interval of the system message of the target eNB. If a change interval of the system message of the target eNB is different from a change interval of a system message of the source eNB, when the updated configuration information is received, a change interval factor of the system message and a default paging cycle that are of the target eNB are further received; and the processor is further configured to acquire the change interval of the system message of the target eNB according to the change interval factor and the default paging cycle, and perform the handover operation through the original configuration information or the updated configuration information selected from the received original configuration information and updated configuration information according to time of the handover operation and the change interval of the system message of the target eNB. If an SFN offset between the target eNB and the source eNB is non-zero, information about the SFN offset between the target eNB and the source eNB is further received; and the processor is further configured to perform the handover operation through the original configuration information or the updated configuration information selected according to the time of the handover operation, and the received or the acquired change interval of the system message of the target eNB, and the information about the SFN offset between the target eNB and the source eNB. If the system message received by the receiving unit is an original system message, the system message further includes a first tag; and if the system message received by the receiving unit is an updated system message, the system message further includes a second tag, where the first tag is used to indicate that the system message is the original system message, and the second tag is used to indicate that the system message is the updated system message. If an updated tag sent by the target eNB is received, the processor is further configured to determine, by means of comparison, whether the received updated tag is the same as a tag in the received system message, where the updated tag is the same as the first tag; and if the updated tag is the same as the tag in the system message, perform the handover operation through the original configuration information; and if the updated tag is different from the tag in the system message, use the updated configuration information and perform the handover operation according to the updated configuration information.

In conclusion, according to the equipment provided in this embodiment, after receiving original configuration information and updated configuration information that are sent by a target eNB to UE, the UE performs a handover operation through the original configuration information or the updated configuration information selected from the received original configuration information and updated configuration information, thereby alleviating a problem, caused by a change of configuration information in a handover process, that the UE fails to be handed over and a handover delay is increased, and further improving handover performance.

It should be noted that, in a process in which the mobility management equipment provided in the foregoing embodiments performs mobility management, description is made only through division of the foregoing functional units as an example. In actual application, the foregoing functions may be allocated to different functional units for implementation as required. That is, an internal structure of the equipment is divided into different functional units so as to implement all or part of the functions described above. In addition, the mobility management source base station equipment, target base station equipment, user equipment, and system that are provided in the foregoing embodiments belong to a same concept as the mobility management method embodiments, and for a specific implementation process of the foregoing equipments, refer to the method embodiments. Details are not described herein again.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

## Claims

1. A mobility management method, wherein the method comprises:
receiving (401), by a target evolved NodeB, eNB, (902) a handover request sent by a source eNB (901), wherein the handover request is used to hand over a user equipment, UE, from the source eNB to the target eNB;
**characterized in that** the method comprises:
sending (404), by the target eNB, original configuration information and updated configuration information to the UE, wherein the original configuration information and the updated configuration information are used for the UE to perform a handover operation from the source eNB to the target eNB according to a selection between the original configuration information and the updated configuration information,
wherein the method further comprises:
sending, by the target eNB, an updated tag to the UE through the source eNB, wherein the updated tag is used for the UE to select the original configuration information or the updated configuration information between the original configuration information and the updated configuration information to perform the handover operation according to the updated tag.

2. The method according to claim 1, wherein the sending, by the target eNB (902), original configuration information and updated configuration information to the UE comprises:
broadcasting, by the target eNB, a system message to the UE; wherein
if the system message is an original system message, the system message carries the original configuration information; and
if the system message is an updated system message, the system message carries the updated configuration information.

3. The method according to claim 2, wherein a change interval of the system message of the target eNB (902) is different from a change interval of a system message of the source eNB (901);
wherein when the updated configuration information is sent to the UE through the source eNB, the change interval of the system message of the target eNB is sent to the UE through the source eNB,
wherein the change interval of the system message of the target eNB is used for the UE to perform the handover operation through the original configuration information or the updated configuration information selected from the original configuration information and updated configuration information according to the change interval of the system message of the target eNB.

4. The method according to claim 2, wherein a change interval of the system message of the target eNB (902) is different from a change interval of a system message of the source eNB (901);
wherein when the updated configuration information is sent to the UE through the source eNB, a change interval factor of the system message and a default paging cycle that are of the target eNB are sent to the UE through the source eNB,
wherein the change interval factor of the system message and the default paging cycle that are of the target eNB are used for the UE to perform the handover operation through the original configuration information or the updated configuration information selected from the received original configuration information and updated configuration information according to the change interval factor of the system message and the default paging cycle that are of the target eNB.

5. The method according to claim 3, wherein a system frame number, SFN, offset between the target eNB and the source eNB is non-zero;
wherein information about the SFN offset between the target eNB and the source eNB is sent to the UE through the source eNB, wherein the information about the SFN offset between the target eNB and the source eNB is used for the UE to perform the handover operation through the original configuration information or the updated configuration information selected from the received original configuration information and updated configuration information according to the SFN offset information of the target eNB and the source eNB.

6. An evolved NodeB, eNB, (902) which is target eNB for handover of a user equipment, UE, wherein the target eNB comprises:
means (501) for receiving a handover request sent by a source eNB, wherein the handover request is used to hand over the UE from the source eNB to the target eNB; **characterized in that** the eNB comprises:
means (502) for sending original configuration information and updated configuration information to the UE, wherein the original configuration information and the updated configuration information are used for the UE to perform a handover operation according to a selection between the original configuration information and the updated configuration information,
wherein the eNB further comprises:
means (503) for sending an updated tag to the UE through the source eNB, wherein the updated tag is used for the UE to select the original configuration information or the updated configuration information between the original configuration information and the updated configuration information to perform the handover operation according to the updated tag.

7. The eNB according to claim 6,
wherein the means for sending the original information and the updated configuration information, configured to broadcast a system message to the UE,
wherein if the system message is an original system message, the system message carries the original configuration information; and if the system message is an updated system message, the system message carries the updated configuration information.

8. The eNB (902) according to claim 6, wherein a change interval of the system message of the target eNB is different from a change interval of a system message of the source eNB;
wherein when the target eNB sends the updated configuration information to the UE through the source eNB, the means for sending original configuration information and updated configuration information is further configured to send the change interval of the system message of the target eNB to the UE through the source eNB,
wherein the change interval of the system message of the target eNB is used for the UE to perform the handover operation through the original configuration information or the updated configuration information selected from the received original configuration information and updated configuration information according to the change interval of the system message of the target eNB.

9. The eNB (902) according to claim 6, wherein a change interval of the system message of the target eNB is different from a change interval of a system message of the source eNB (901);
when sending the updated configuration information to the UE through the source eNB, the means for sending original configuration information and updated configuration information is further configured to send a change interval factor of the system message and a default paging cycle that are of the target eNB to the UE through the source eNB,
wherein the change interval factor of the system message and the default paging cycle that are of the target eNB are used for the UE to perform the handover operation through the original configuration information or the updated configuration information selected from the received original configuration information and updated configuration information according to the change interval factor of the system message and the default paging cycle that are of the target eNB.

10. The eNB (902) according to claim 8 or 9, wherein a system frame number, SFN, offset between the target eNB and the source eNB is non-zero;
wherein the means for sending original configuration information and updated configuration information is further configured to send information about the SFN offset between the target eNB and the source eNB to the UE through the source eNB,
wherein the information about the SFN offset between the target eNB and the source eNB is used for the UE to perform the handover operation through the original configuration information or the updated configuration information selected from the received original configuration information and updated configuration information according to the SFN offset information of the target eNB and the source eNB.

11. User equipment, UE, wherein the UE comprises:
means (701) for sending a measurement report on a cell for a source evolved NodeB, eNB (901) for determining to send a handover request to a target eNB (902), wherein the handover request is used to hand over the UE from the source eNB to the target eNB;
**characterized in that** the UE comprises:
means (702) for receiving original configuration information and updated configuration information that are sent by the target eNB, wherein the original configuration information and the updated configuration information are used for the UE to perform a handover operation according to a selection between the original configuration information and the updated configuration information; and
means (703) for performing a handover operation through the original configuration information or the updated configuration information selected by the UE,
wherein the UE further comprises:
means (704) for receiving, through the source eNB, an updated tag sent by the target eNB; wherein the updated tag is used for the UE to select the original configuration information or the updated configuration information between the original configuration information and the updated configuration information to perform the handover operation according to the updated tag.

12. The UE according to claim 11, wherein the means for receiving the original configuration information and the updated configuration information is configured to receive a system message broadcasted by the target eNB, wherein if the system message is an original system message, the system message carries the original configuration information; and if the system message is an updated system message, the system message carries the updated configuration information.

## Patentansprüche

1. Mobilitätsverwaltungsverfahren, wobei das Verfahren umfasst:
Empfangen (401), durch einen Ziel-"Evolved-NodeB", Ziel-eNB, (902) einer von einem Quell-eNB (901) gesendeten Verbindungsübergabeanforderung, wobei die Verbindungsübergabeanforderung verwendet wird, um ein Endgerät, UE, vom Quell-eNB an den Ziel-eNB zu übergeben;
**dadurch gekennzeichnet, dass** das Verfahren umfasst:
Senden (404) von ursprünglichen Konfigurationsinformationen und aktualisierten Konfigurationsinformationen an das UE durch den Ziel-eNB, wobei die ursprünglichen Konfigurationsinformationen und die aktualisierten Konfigurationsinformationen vom UE verwendet werden, um einen Verbindungsübergabevorgang vom Quell-eNB zum Ziel-eNB in Übereinstimmung mit einer Auswahl zwischen den ursprünglichen Konfigurationsinformationen und den aktualisierten Konfigurationsinformationen durchzuführen,
wobei das Verfahren ferner umfasst:
Senden einer aktualisierten Kennzeichnung vom Ziel-eNB über den Quell-eNB an das UE, wobei die aktualisierte Kennzeichnung vom UE verwendet wird, um die ursprünglichen Konfigurationsinformationen oder die aktualisierten Konfigurationsinformationen aus den ursprünglichen Konfigurationsinformationen und aktualisierten Konfigurationsinformationen auszuwählen, um den Verbindungsübergabevorgang in Übereinstimmung mit der aktualisierten Kennzeichnung durchzuführen.

2. Verfahren nach Anspruch 1, wobei das Senden der ursprünglichen Konfigurationsinformationen und der aktualisierten Konfigurationsinformationen durch den Ziel-eNB (902) an das UE umfasst:
Aussenden einer Systemnachricht vom Ziel-eNB an das UE; wobei falls die Systemnachricht eine ursprüngliche Systemnachricht ist, die Systemnachricht die ursprünglichen Konfigurationsinformationen trägt; und
falls die Systemnachricht eine aktualisierte Systemnachricht ist, die Systemnachricht die aktualisierten Konfigurationsinformationen trägt.

3. Verfahren nach Anspruch 2, wobei ein Änderungsintervall der Systemnachricht des Ziel-eNB (902) von einem Änderungsintervall einer Systemnachricht des Quell-eNB (901) verschieden ist;
wobei, wenn die aktualisierten Konfigurationsinformationen über den Quell-eNB an das UE gesendet werden, das Änderungsintervall der Systemnachricht des Ziel-eNB über den Quell-eNB an das UE gesendet wird,
wobei das Änderungsintervall der Systemnachricht des Ziel-eNB vom UE verwendet wird, um den Verbindungsübergabevorgang durch die ursprünglichen Konfigurationsinformationen oder die aktualisierten Konfigurationsinformationen, die aus den ursprünglichen Konfigurationsinformationen und den aktualisierten Konfigurationsinformationen ausgewählt wurden, in Übereinstimmung mit dem Änderungsintervall der Systemnachricht des Ziel-eNB durchzuführen.

4. Verfahren nach Anspruch 2, wobei ein Änderungsintervall der Systemnachricht des Ziel-eNB (902) von einem Änderungsintervall einer Systemnachricht des Quell-eNB (901) verschieden ist;
wobei, wenn die aktualisierten Konfigurationsinformationen über den Quell-eNB an das UE gesendet werden, ein Änderungsintervallfaktor der Systemnachricht und ein Standard-Funkrufzyklus, beide vom Ziel-eNB, über den Quell-eNB an das UE gesendet werden,
wobei der Änderungsintervallfaktor der Systemnachricht und der Standard-Funkrufzyklus, beide vom Ziel-eNB, vom UE verwendet werden, um den Verbindungsübergabevorgang durch die ursprünglichen Konfigurationsinformationen oder die aktualisierten Konfigurationsinformationen, die aus den empfangenen ursprünglichen Konfigurationsinformationen und aktualisierten Konfigurationsinformationen ausgewählt wurden, in Übereinstimmung mit dem Änderungsintervallfaktor der Systemnachricht und dem Standard-Funkrufzyklus, beide vom Ziel-eNB, durchzuführen.

5. Verfahren nach Anspruch 3, wobei ein Versatz einer Systemrahmennummer, SFN, zwischen dem Ziel-eNB und dem Quell-eNB von null verschieden ist;
wobei Informationen über den SFN-Versatz zwischen dem Ziel-eNB und dem Quell-eNB über den Quell-eNB an das UE gesendet werden, wobei die Informationen über den SFN-Versatz zwischen dem Ziel-eNB und dem Quell-eNB vom UE verwendet werden, um den Verbindungsübergabevorgang durch die ursprünglichen Konfigurationsinformationen oder die aktualisierten Konfigurationsinformationen, die aus den empfangenen ursprünglichen Konfigurationsinformationen und aktualisierten Konfigurationsinformationen ausgewählt wurden, in Übereinstimmung mit den SFN-Versatzinformationen zwischen dem Ziel-eNB und dem Quell-eNB durchzuführen.

6. "Evolved NodeB", eNB, (902), der ein Ziel-eNB für eine Verbindungsübergabe eines Endgeräts, UE, ist, wobei der Ziel-eNB umfasst:
Mittel (501) zum Empfangen einer von einem Quell-eNB gesendeten Verbindungsübergabeanforderung, wobei die Verbindungsübergabeanforderung verwendet wird, um das UE vom Quell-eNB an den Ziel-eNB zu übergeben;
**dadurch gekennzeichnet, dass** der eNB umfasst:
Mittel (502) zum Senden von ursprünglichen Konfigurationsinformationen und aktualisierten Konfigurationsinformationen an das UE, wobei die ursprünglichen Konfigurationsinformationen und die aktualisierten Konfigurationsinformationen vom UE verwendet werden, um einen Verbindungsübergabevorgang in Übereinstimmung mit einer Auswahl zwischen den ursprünglichen Konfigurationsinformationen und den aktualisierten Konfigurationsinformationen durchzuführen,
wobei der eNB ferner umfasst:
Mittel (503) zum Senden einer aktualisierten Kennzeichnung über den Quell-eNB an das UE, wobei die aktualisierte Kennzeichnung vom UE verwendet wird, um die ursprünglichen Konfigurationsinformationen oder die aktualisierten Konfigurationsinformationen aus den ursprünglichen Konfigurationsinformationen und den aktualisierten Konfigurationsinformationen auszuwählen, um den Verbindungsübergabevorgang in Übereinstimmung mit der aktualisierten Kennzeichnung durchzuführen.

7. eNB nach Anspruch 6,
wobei das Mittel zum Senden der ursprünglichen Konfigurationsinformationen und der aktualisierten Konfigurationsinformationen konfiguriert ist, eine Systemnachricht an das UE auszusenden,
wobei, falls die Systemnachricht eine ursprüngliche Systemnachricht ist, die Systemnachricht die ursprünglichen Konfigurationsinformationen trägt; und falls die Systemnachricht eine aktualisierte Systemnachricht ist, die Systemnachricht die aktualisierten Konfigurationsinformationen trägt.

8. eNB (902) nach Anspruch 6, wobei ein Änderungsintervall der Systemnachricht des Ziel-eNB von einem Änderungsintervall einer Systemnachricht des Quell-eNB verschieden ist;
wobei, wenn der Ziel-eNB die aktualisierten Konfigurationsinformationen über den Quell-eNB an das UE sendet, das Mittel zum Senden der ursprünglichen Konfigurationsinformationen und der aktualisierten Konfigurationsinformationen ferner konfiguriert ist, das Änderungsintervall der Systemnachricht des Ziel-eNB über den Quell-eNB an das UE zu senden,
wobei das Änderungsintervall der Systemnachricht des Ziel-eNB vom UE verwendet wird, um den Verbindungsübergabevorgang durch die ursprünglichen Konfigurationsinformationen oder die aktualisierten Konfigurationsinformationen, die aus den empfangenen ursprünglichen Konfigurationsinformationen und aktualisierten Konfigurationsinformationen ausgewählt wurden, in Übereinstimmung mit dem Änderungsintervall der Systemnachricht des Ziel-eNB durchzuführen.

9. eNB (902) nach Anspruch 6, wobei ein Änderungsintervall der Systemnachricht des Ziel-eNB von einem Änderungsintervall einer Systemnachricht des Quell-eNB (901) verschieden ist;
das Mittel zum Senden der ursprünglichen Konfigurationsinformationen und der aktualisierten Konfigurationsinformationen beim Senden der aktualisierten Konfigurationsinformationen über den Quell-eNB an das UE ferner konfiguriert ist, einen Änderungsintervallfaktor der Systemnachricht und einen Standard-Funkrufzyklus, beide vom Ziel-eNB, über den Quell-eNB an das UE zu senden, wobei der Änderungsintervallfaktor der Systemnachricht und der Standard-Funkrufzyklus, beide vom Ziel-eNB, vom UE verwendet werden, um den Verbindungsübergabevorgang durch die ursprünglichen Konfigurationsinformationen oder die aktualisierten Konfigurationsinformationen, die aus den empfangenen ursprünglichen Konfigurationsinformationen und aktualisierten Konfigurationsinformationen ausgewählt wurden, in Übereinstimmung mit dem Änderungsintervallfaktor der Systemnachricht und dem Standard-Funkrufzyklus, beide vom Ziel-eNB, durchzuführen.

10. eNB (902) nach Anspruch 8 oder 9, wobei ein Versatz einer Systemrahmennummer, SFN, zwischen dem Ziel-eNB und dem Quell-eNB von null verschieden ist;
wobei das Mittel zum Senden der ursprünglichen Konfigurationsinformationen und der aktualisierten Konfigurationsinformationen ferner konfiguriert ist, Informationen über den SFN-Versatz zwischen dem Ziel-eNB und dem Quell-eNB über den Quell-eNB an das UE zu senden,
wobei die Informationen über den SFN-Versatz zwischen dem Ziel-eNB und dem Quell-eNB vom UE verwendet werden, um den Verbindungsübergabevorgang durch die ursprünglichen Konfigurationsinformationen oder die aktualisierten Konfigurationsinformationen, die aus den empfangenen ursprünglichen Konfigurationsinformationen und aktualisierten Konfigurationsinformationen ausgewählt wurden, in Übereinstimmung mit den SFN-Versatzinformationen zwischen dem Ziel-eNB und dem Quell-eNB durchzuführen.

11. Endgerät, UE, wobei das UE umfasst:
Mittel (701) zum Senden eines Messberichts über eine Zelle für einen Quell-"Evolved-NodeB", Quell-eNB, (901) zum Ermitteln, eine Verbindungsübergabeanforderung an einen Ziel-eNB (902) zu senden, wobei die Verbindungsübergabeanforderung verwendet wird, das UE vom Quell-eNB an den Ziel-eNB zu übergeben;
**dadurch gekennzeichnet, dass** das UE umfasst:
Mittel (702) zum Empfangen von ursprünglichen Konfigurationsinformationen und aktualisierten Konfigurationsinformationen, die vom Ziel-eNB gesendet werden, wobei die ursprünglichen Konfigurationsinformationen und die aktualisierten Konfigurationsinformationen vom UE verwendet werden, um einen Verbindungsübergabevorgang in Übereinstimmung mit einer Auswahl zwischen den ursprünglichen Konfigurationsinformationen und den aktualisierten Konfigurationsinformationen durchzuführen; und
Mittel (703) zum Durchführen eines Verbindungsübergabevorgangs durch die ursprünglichen Konfigurationsinformationen oder die aktualisierten Konfigurationsinformationen, die vom UE ausgewählt wurden,
wobei das UE ferner umfasst:
Mittel (704) zum Empfangen einer aktualisierten Kennzeichnung, die vom Ziel-eNB gesendet wurde, durch den Quell-eNB; wobei die aktualisierte Kennzeichnung vom UE verwendet wird, um die ursprünglichen Konfigurationsinformationen oder die aktualisierten Konfigurationsinformationen aus den ursprünglichen Konfigurationsinformationen und den aktualisierten Konfigurationsinformationen auszuwählen, um den Verbindungsübergabevorgang in Übereinstimmung mit der aktualisierten Kennzeichnung durchzuführen.

12. UE nach Anspruch 11, wobei das Mittel zum Empfangen der ursprünglichen Konfigurationsinformationen und der aktualisierten Konfigurationsinformationen konfiguriert ist, eine vom Ziel-eNB ausgesandte Systemnachricht zu empfangen, wobei, falls die Systemnachricht eine ursprüngliche Systemnachricht ist, die Systemnachricht die ursprünglichen Konfigurationsinformationen trägt; und falls die Systemnachricht eine aktualisierte Systemnachricht ist, die Systemnachricht die aktualisierten Konfigurationsinformationen trägt.

## Revendications

1. Procédé de gestion de la mobilité, dans lequel le procédé comprend les étapes suivantes :
recevoir (401), par un noeudB évolué, eNB, cible (902) une requête de transfert intercellulaire envoyée par un eNB source (901), la requête de transfert intercellulaire étant utilisée pour transférer un équipement utilisateur, UE, à partir de l'eNB source jusqu'à l'eNB cible ;
**caractérisé en ce que** le procédé comprend :
envoyer (404), par l'eNB cible, des informations de configuration originales et des informations de configuration mises à jour à l'UE, les informations de configuration originales et les informations de configuration mises à jour étant utilisées pour que l'UE exécute une opération de transfert intercellulaire à partir de l'eNB source jusqu'à l'eNB cible selon une sélection entre les informations de configuration originales et les informations de configuration mises à jour,
le procédé comprenant en outre :
envoyer, par l'eNB cible, une étiquette mise à jour à l'UE par l'intermédiaire de l'eNB source, l'étiquette mise à jour étant utilisée pour que l'UE sélectionne les informations de configuration originales ou les informations de configuration mises à jour entre les informations de configuration originales et les informations de configuration mises à jour pour exécuter l'opération de transfert intercellulaire selon l'étiquette mise à jour.

2. Procédé selon la revendication 1, dans lequel l'étape consistant à envoyer, par l'eNB (902), des informations de configuration originales et des informations de configuration mises à jour à l'UE comprend :
transmettre, par l'eNB cible, un message système à l'UE ;
si le message système est un message système original, le message système contenant les informations de configuration originales ; et
si le message système est un message système mis à jour, le message système contenant les informations de configuration mises à jour.

3. Procédé selon la revendication 2, dans lequel un intervalle de changement du message système de l'eNB cible (902) est différent d'un intervalle de changement d'un message système de l'eNB source (901) ;
lorsque les informations de configuration mises à jour sont envoyées à l'UE par l'intermédiaire de l'eNB source, l'intervalle de changement du message système de l'eNB cible étant envoyé à l'UE par l'intermédiaire de l'eNB source,
l'intervalle de changement du message système de l'eNB cible étant utilisé pour que l'UE exécute l'opération de transfert intercellulaire par l'intermédiaire des informations de configuration originales ou des informations de configuration mises à jour sélectionnées à partir des informations de configuration originales et des informations de configuration mises à jour selon l'intervalle de changement du message système de l'eNB cible.

4. Procédé selon la revendication 2, dans lequel un intervalle de changement du message système de l'eNB cible (902) est différent d'un intervalle de changement d'un message système de l'eNB source (901) ;
lorsque les informations de configuration mises à jour sont envoyées à l'UE par l'intermédiaire de l'eNB source, un facteur d'intervalle de changement du message système et un cycle de radiomessagerie par défaut qui appartiennent à l'eNB cible étant envoyés à l'UE par l'intermédiaire de l'eNB source,
le facteur d'intervalle de changement du message système et le cycle de radiomessagerie par défaut qui appartiennent à l'eNB cible étant utilisés pour que l'UE exécute l'opération de transfert intercellulaire par l'intermédiaire des informations de configuration originales ou des informations de configuration mises à jour sélectionnées à partir des informations de configuration originales reçues et des informations de configuration mises à jour selon le facteur d'intervalle de changement du message système et le cycle de radiomessagerie par défaut qui appartiennent à l'eNB cible.

5. Procédé selon la revendication 3, dans lequel un décalage de numéro de trame système, SFN, entre l'eNB cible et l'eNB source est non zéro ;
des informations concernant le décalage SFN entre l'eNB cible et l'eNB source étant envoyées à l'UE par l'intermédiaire de l'eNB source, les informations concernant le décalage SFN entre l'eNB cible et l'eNB source étant utilisées pour que l'UE exécute l'opération de transfert intercellulaire par l'intermédiaire des informations de configuration originales ou des informations de configuration mises à jour sélectionnées à partir des informations de configuration originales reçues et des informations de configuration mises à jour selon les informations de décalage SFN de l'eNB cible et de l'eNB source.

6. NoeudB évolué, eNB, (902) qui est un eNB cible pour un transfert intercellulaire d'un équipement utilisateur, UE, dans lequel l'eNB cible comprend :
des moyens (501) destinés à recevoir une requête de transfert intercellulaire envoyée par un eNB source, la requête de transfert intercellulaire étant utilisée pour transférer l'UE à partir de l'eNB source jusqu'à l'eNB cible ;
**caractérisé en ce que** l'eNB comprend :
des moyens (502) destinés à envoyer des informations de configuration originales et des informations de configuration mises à jour à l'UE, les informations de configuration originales et les informations de configuration mises à jour étant utilisées pour que l'UE exécute une opération de transfert intercellulaire selon une sélection entre les informations de configuration originales et les informations de configuration mises à jour,
l'eNB comprenant en outre :
des moyens (503) destinés à envoyer une étiquette mise à jour à l'UE par l'intermédiaire de l'eNB source, l'étiquette mise à jour étant utilisée pour que l'UE sélectionne les informations de configuration originales ou les informations de configuration mises à jour entre les informations de configuration originales et les informations de configuration mises à jour pour exécuter l'opération de transfert intercellulaire selon l'étiquette mise à jour.

7. eNB selon la revendication 6, dans lequel les moyens destinés à envoyer les informations originales et les informations de configuration mises à jour sont configurés pour transmettre un message système à l'UE,
si le message système est un message système original, le message système contenant les informations de configuration originales ; et si le message système est un message système mis à jour, le message système contenant les informations de configuration mises à jour.

8. eNB (902) selon la revendication 6, dans lequel un intervalle de changement du message système de l'eNB cible est différent d'un intervalle de changement d'un message système de l'eNB source ;
lorsque l'eNB cible envoie les informations de configuration mises à jour à l'UE par l'intermédiaire de l'eNB source, les moyens destinés à envoyer des informations de configuration originales et des informations de configuration mises à jour sont en outre configurés pour envoyer l'intervalle de changement du message système de l'eNB cible à l'UE par l'intermédiaire de l'eNB source,
l'intervalle de changement du message système de l'eNB cible étant utilisé pour que l'UE exécute l'opération de transfert intercellulaire par l'intermédiaire des informations de configuration originales ou des informations de configuration mises à jour sélectionnées à partir des informations de configuration originales reçues et des informations de configuration mises à jour selon l'intervalle de changement du message système de l'eNB cible.

9. eNB (902) selon la revendication 6, dans lequel un intervalle de changement du message système de l'eNB cible est différent d'un intervalle de changement d'un message système de l'eNB source (901) ;
lors de l'envoi des informations de configuration mises à jour à l'UE par l'intermédiaire de l'eNB source, les moyens destinés à envoyer des informations de configuration originales et des informations de configuration mises à jour sont en outre configurés pour envoyer un facteur d'intervalle de changement du message système et un cycle de radiomessagerie par défaut qui appartiennent à l'eNB cible à l'UE par l'intermédiaire de l'eNB source,
le facteur d'intervalle de changement du message système et le cycle de radiomessagerie par défaut qui appartiennent à l'eNB cible étant utilisés pour que l'UE exécute l'opération de transfert intercellulaire par l'intermédiaire des informations de configuration originales ou des informations de configuration mises à jour sélectionnées à partir des informations de configuration originales reçues et des informations de configuration mises à jour selon le facteur d'intervalle de changement du message système et le cycle de radiomessagerie par défaut qui appartiennent à l'eNB cible.

10. eNB (902) selon la revendication 8 ou 9, dans lequel un décalage de numéro de trame système, SFN entre l'eNB cible et l'eNB source est non zéro ;
les moyens destinés à envoyer des informations de configuration originales et des informations de configuration mises à jour étant en outre configurés pour envoyer des informations concernant le décalage SFN entre l'eNB cible et l'eNB source à l'UE par l'intermédiaire de l'eNB source,
les informations concernant le décalage SFN entre l'eNB cible et l'eNB source étant utilisées pour que l'UE exécute l'opération de transfert intercellulaire par l'intermédiaire des informations de configuration originales ou des informations de configuration mises à jour sélectionnées à partir des informations de configuration originales reçues et des informations de configuration mises à jour selon les informations de décalage SFN de l'eNB cible et de l'eNB source.

11. Equipement utilisateur, UE, dans lequel l'UE comprend :
des moyens (701) destinés à envoyer un rapport de mesure concernant une cellule pour un noeudB évolué, eNB, source (901) permettant de déterminer d'envoyer une requête de transfert intercellulaire à un eNB cible (902), la requête de transfert intercellulaire étant utilisée pour transférer l'UE à partir de l'eNB source jusqu'à l'eNB cible ;
**caractérisé en ce que** l'UE comprend :
des moyens (702) destinés à recevoir des informations de configuration originales et des informations de configuration mises à jour qui sont envoyées par l'eNB cible, les informations de configuration originales et les informations de configuration mises à jour étant utilisées pour que l'UE exécute une opération de transfert intercellulaire selon une sélection entre les informations de configuration originales et les informations de configuration mises à jour ; et
des moyens (703) destinés à exécuter une opération de transfert intercellulaire par l'intermédiaire des informations de configuration originales ou des informations de configuration mises à jour sélectionnées par l'UE,
l'UE comprenant en outre :
des moyens (704) destinés à recevoir, par l'intermédiaire de l'eNB source, une étiquette mise à jour envoyée par l'eNB cible ; l'étiquette mise à jour étant utilisée pour que l'UE sélectionne les informations de configuration originales ou les informations de configuration mises à jour entre les informations de configuration originales et les informations de configuration de mises à jour pour exécuter l'opération de transfert intercellulaire selon l'étiquette mise à jour.

12. UE selon la revendication 11, dans lequel les moyens destinés à recevoir les informations de configuration originales et les informations de configuration mises à jour sont configurés pour recevoir un message système transmis par l'eNB cible, si le message système est un message système original, le message système contenant les informations de configuration originales ; et si le message système est un message système mis à jour, le message système contenant les informations de configuration mises à jour.
